# EUROPEAN PATENT SPECIFICATION

(11) **EP 1 918 186 B1**
(45) Date of publication and mention of the grant of the patent: **02.06.2010**
(21) Application number: 07119382.5
(22) Date of filing: 26.10.2007
(51) Int. Cl.: B62J 6/12

(54) **Bicycle electric generator**
Elektrogenerator für ein Fahrrad
Générateur électrique de bicyclette

(30) Priority: 30.10.2006 JP 2006293921
(43) Date of publication of application: 07.05.2008
(73) Proprietor: SHIMANO INC., Osaka 590-8577 (JP)
(72) Inventor: Kitamura, Satoshi, Osaka 590-8577 (JP)
(74) Representative: Grosse - Schumacher - Knauer - von Hirschhausen

(56) References cited:
- EP-A- 0 778 654
- EP-A- 1 601 083
- DE-A1- 19 601 542

## Description

### BACKGROUND OF THE INVENTION

### Field of the Invention

This invention generally relates to a bicycle electric generator. More specifically, the present invention relates to relates to a bicycle electric generator that can be connected to an illumination device having light-emitting diodes.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Recently, bicycles have been provided with headlights, tail lights and other bicycle illumination devices that use light-emitting diodes in order to reduce problems with bulb burnout and the like. For example, such a bicycle illumination device is disclosed in Japanese Laid-Open Patent Application No. 2005-329737. In conventional illumination devices, the light-emitting diodes are often illuminated by electricity generated with a hub dynamo placed in a wheel. Two light-emitting diodes are provided and are connected in parallel to each other in opposite directions. The AC power outputted from the hub dynamo can thereby be used without being rectified.

The hub dynamo has a power generation unit with a stator and a rotor. The stator has a coil disposed on a hub axle. The rotor is fixed to a hub shell and has a magnet. The hub dynamo generates AC power having voltage that corresponds to the bicycle speed (rotational speed of the hub shell) at both ends of the coil of the stator. This AC power is then supplied to the illumination device.

When a hub dynamo is used as a power source and light-emitting diodes are used as a light source, the obtainable output is extremely low compared to that of a light bulb. The reason for this is thought to be the difference in load characteristics between light bulbs and light-emitting diodes. In the case of a resistance load, such as that of a light bulb, the electric current flowing through the light bulb is generally proportional to a voltage, in accordance with Ohm's law. However, with the load of a light-emitting diode, an electric current rapidly begins to flow at about 2 to 4 volts. Due to the difference in electric current and voltage characteristics stemming from the difference in loads, a light-emitting diode is capable of a lower output than a light bulb when a hub dynamo is used as a power source.

The document DE-A1-19601542 discloses a hub dynamo in accordance with preamble of claim 1 with a magnet as rotor and a coil as stator.

In view of the above, it will be apparent to those skilled in the art from this disclosure that there exists a need for an improved bicycle electric generator. This invention addresses this need in the art as well as other needs, which will become apparent to those skilled in the art from this disclosure.

### SUMMARY OF THE INVENTION

It has been discovered that in cases in which a light bulb, which has a resistance load, is used as the light source, by setting the number of turns of the coil based on the resistance load makes it possible to obtain a more appropriate output in relation to the rotating state of the power generation unit. Therefore, one possible application of this concept is to set the number of coil turns in accordance with the characteristics of the light-emitting diodes. However, although the number of coil turns is set in this manner, it is impossible with light-emitting diodes to satisfy the output of the power generation unit during both slow rotations and moderate-to-fast rotations. For example, output during moderate-to-fast rotations is reduced when the number of turns is set with emphasis on output during slow rotations, and output during slow rotations is reduced when the number of turns is set with emphasis on output during fast rotations.

One object of the present invention is to provide a bicycle electric generator wherein the output of light-emitting diodes can be improved for both slow rotations and moderate-to-fast rotations when the power generator is connected to light-emitting diodes.

The foregoing object can basically be attained according to a first aspect by providing a bicycle electric generator for providing electricity to an illumination device having light-emitting diodes. In accordance with the first aspect, the bicycle electric generator is provided with a power generation unit and a controller. The power generation unit includes a rotor arranged to rotate and a stator with a coil arranged to produce a plurality of electrical output states in which a number of turns of the coil that are used differs depending on a rotating state of the rotor. The controller is configured to selectively control the electrical output states of the power generation unit in accordance with the rotating state of the rotor of the power generation unit.

In this power generator, when the rotor of the power generation unit rotates, the controller performs switching in accordance with the rotating state of the power generation unit to any of the electrical output states having different numbers of coil turns, and power is outputted at the switched output state. Since the electrical output states can be switched, the optimum output state for the number of turns can be selected in accordance with the rotating state of the power generation unit and the output characteristics of the light-emitting diodes. Therefore, when the power generator is connected to light-emitting diodes, the output of the light-emitting diodes can be improved at both low speeds and moderate-to-high speeds.

The bicycle electric generator according to a second aspect is the apparatus according to the first aspect, wherein the coil includes a first coil and a second coil connected to the first coil. In this case, the first coil and the second coil make it easy to obtain two output states having different numbers of turns. For example, if the two coils are connected in series, two electrical output states can be obtained, i.e., one with the number of turns for one coil and one with the combined number of turns for both coils. If the two coils are connected in parallel, an electrical output state that corresponds to the number of turns of the two coils can be obtained.

The bicycle electric generator according to a third aspect is the apparatus according to the second aspect, wherein the second coil is connected in series with the first coil. In this case, two output states can be selected between the number of turns in either of the coils and the combined number of turns in both of the coils. Therefore, the total number of turns of the coils can be reduced to less than in cases in which two coils are connected in parallel.

The bicycle electric generator according to a fourth aspect is the apparatus according to the second or third aspect, wherein the second coil has a different number of turns from the first coil. In this case, the two coils can be used to set the optimum number of turns in relation to the output of the light-emitting diodes that corresponds to the rotating state.

The bicycle electric generator according to a fifth aspect is the apparatus according to any of the second through fourth aspects, further comprising first and second switches connected separately to the first coil and second coil; and a rotating state detector operatively arranged to detect the rotating state of the rotor of the power generation unit, with the controller being operatively arranged to selectively turn on one of the first and second switches in accordance with the rotating state detected by the rotating state detector. In this case, output can be improved in real time because the two coils are switched according to the detected rotating state.

The bicycle electric generator according to a sixth aspect is the apparatus according to the first aspect, wherein the coil includes a fixed terminal and a variable terminal for varying the number of turns, with the controller being configured to control the variable terminal of the coil, and to selectively control the electrical output states in accordance with the rotating state of the rotor. In this case, controlling the variable terminal makes it possible to switch the optimum output state in accordance with the output characteristics of the light-emitting diodes.

The bicycle electric generator according to a seventh aspect is the apparatus according to any of the first through sixth aspects, wherein the rotating state is the rotational speed of the rotor. In this case, the electrical output state can be switched according to the rotational speed of the rotor.

According to the present invention, since the electrical output states of the coils can be switched, the optimum electrical output state for the number of turns can be selected in accordance with the rotating state of the power generation unit and the output characteristics of the light-emitting diodes. Therefore, when the power generator is connected to light-emitting diodes, the output of the light-emitting diodes can be improved at both low speeds and moderate-to-high speeds.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle equipped with a claw-pole electric generator (hub dynamo) in accordance with a first embodiment of the present invention;
Figure 2 is a partial cross-sectional view of the electric generator (hub dynamo) illustrated in Figure 1 in accordance with the first embodiment;
Figure 3 is a control block diagram for the electric generator (hub dynamo) in accordance with the first embodiment;
Figure 4 is a control flowchart for the electric generator (hub dynamo) in accordance with the first embodiment;
Figure 5 is a control block diagram, similar to Figure 3, for an electric generator (hub dynamo) in accordance with a modification of the first embodiment;
Figure is a control block diagram, similar to Figure 3, for an electric generator (hub dynamo) in accordance with a second embodiment;

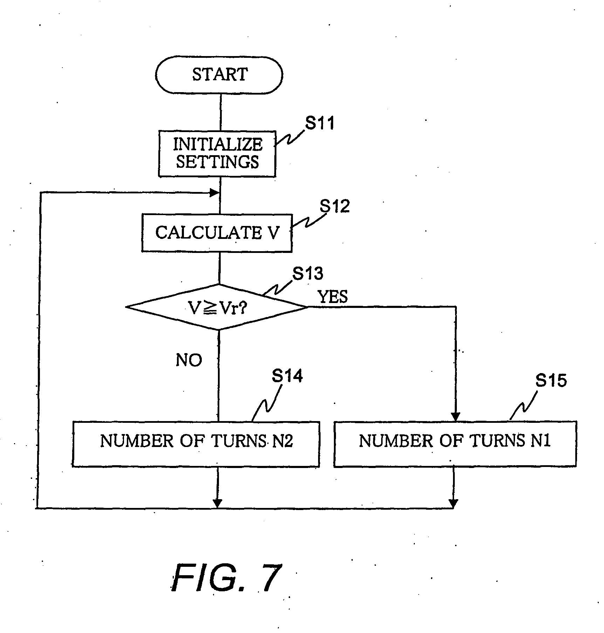

Figure 7 is a control flowchart, similar to Figure 4, for an electric generator (hub dynamo) in accordance with a second embodiment;
Figure 8 is a graph showing the relationship between the output of the light-emitting diodes and the rotational speed of the rotor when the number of coil turns is varied in a case in which the light-emitting diodes are bi-directionally connected;
Figure 9 is a graph, similar to Figure 8, showing the relationship between the output of the light-emitting diodes and the rotational speed of the rotor when a rectifier circuit is used; and
Figure 10 is a graph showing the electrical output states output curves of the light-emitting diodes in accordance with one embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

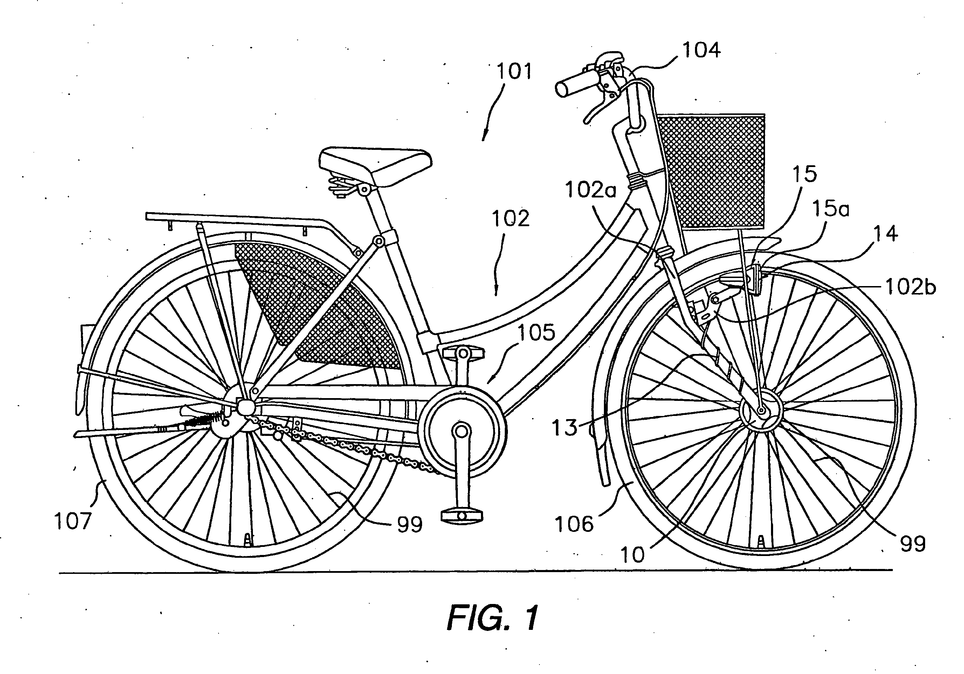

Referring initially to Figure 1, a bicycle 1 is illustrated in accordance with a first embodiment of the present invention. The bicycle 1 includes a frame 102, a handlebar 104, a drive unit 105, a front wheel 106 and a rear wheel 107. The frame 102 includes a front fork 102a. The drive unit 105 includes a chain, pedals and the like. The front and rear wheels 106 and 107 are bicycle wheels having a plurality of spokes 99.

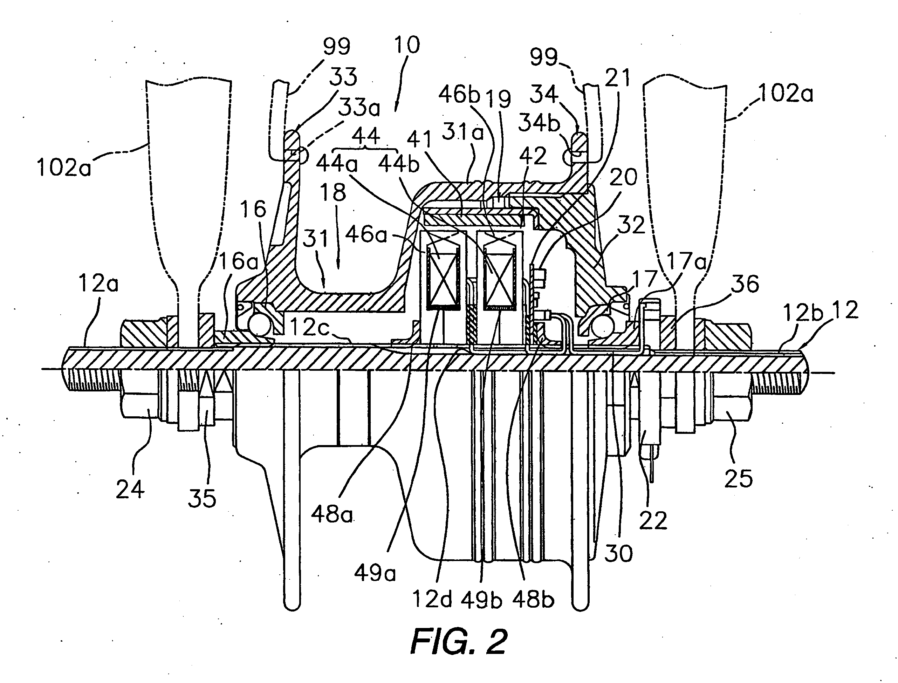

The front wheel 106 has a hub dynamo or bicycle electric generator 10 that is incorporated therein. Electricity generated by the bicycle electric generator 10 is supplied to an external headlight 14 via a power source wire or line 13. The hub dynamo 10 according to the first embodiment is mounted in the front wheel 106 of the bicycle and at the distal end of the front fork 102a, as shown in Figure 2. The hub dynamo 10 includes a hub axle 12, a hub shell 18, an AC output power generation unit 19, a control unit 20 and a connector 22. The hub axle 12 is fixed at both ends to the front fork 102a. The hub shell 18 is disposed around the external periphery of the hub axle 12 and rotatably supported on the hub axle 12 by a pair of bearings 16 and 17. The power generation unit 19 is disposed between the hub axle 12 and the hub shell 18. The power generation unit 19 (Figure 2) generates power to the headlight (one example of an illumination device) 14 via the power source wire 13. The control unit 20 is configured and arranged for controlling the power generation unit 19. The connector 22 is configured and arranged for supplying the power generated by the power generation unit 19 to the headlight 14, for example, or another such external electrical device. The power source wire 13 is connected to this connector 22.

The hub axle 12 has first, second and third male threaded sections 12a, 12b and 12c and a wire insertion groove 12d. The first and second male threaded sections 12a and 12b are formed at either end of the hub axle 15. The third male threaded section 12c is larger than the first and second male threaded sections 12a and 12b. The third male threaded section 12c is formed between the first and second male threaded sections 12a and 12b. The first, second and third male threaded sections 12a, 12b and 12c are formed on an external peripheral surface of the hub axle 12. The wiring insertion groove 12d is provided for passing an internal wire 30 through the external peripheral surface of the hub axle 12. The internal wire 30 connects the power generation unit 19 and the control unit 20 to the connector 22. The wiring insertion groove 12d is formed from a portion of the hub axle 12 where the electricity-generating mechanism 20 is mounted to an end of the second male threaded section 12b. The insertion groove 12d extends from the mounting region of the power generation unit 19 to the end of the first male screw 12b. The hub axle 12 is non-rotatably fixed on the front fork 2a by first and second fixing nuts 24 and 25 that screw onto the first and second male threaded sections 12a and 12b, respectively.

The hub shell 18 has a stepped cylindrical case main body 31 and a lid member 32. The case main body 31 is a cylindrical member that extends in an axial direction of the hub axle 12. The lid member 32 is screwed in place on the right end of the case main body 31. The case main body 31 is a metal member formed extending in the axial direction of the hub axle 12. The case main body 31 has an expanding part 31a that extends farther outward an external peripheral side of the case main body 31 at a second end (a right side in Figure 2) in the axial direction than at a first end of the case main body 31. The external peripheral side of the case main body 31 has a pair of hub flanges 33 and 34. The hub flanges 33 and 34 are formed on the external peripheral side of the case main body 31 at the first and second ends of the case main body 31, respectively. In the illustrated embodiment, the hub flanges 33 and 34 are formed integrally on the external peripheral surface at the axial ends of the case main body 31. The first flange 33 has a first mounting hole 33a and the second flange 34 has a second mounting hole 34a. The first and second mounting holes 34a and 34b are configured and arranged for mounting internal ends of the spokes 99 in a conventional manner. The first and second mounting holes 33a and 34a are formed at regular intervals in a circumferential direction with phases of the first and second mounting holes 34a and 34b half out of alignment.

The hub shell 18 is fixed in place on the hub axle 12 by first and second hub cones 16a and 17a. The first and second cones 16a and 17a are inner races of the first and second bearings 16 and 17 that screw onto the first and second male threaded sections 12a and 12b, respectively. The first and second hub cones 16a and 17a are positioned and locked into place by first and second locking nuts 35 and 36. The second (right) locking nut 36 locks the second hub cone 17a in place. The second (right) locking nut 36 fixes the connector 22 in place on the hub axle 12.

The power generation unit 19 is a claw-pole type electrical power generator that has a rotor 41 and a stator 42. The rotor 41 includes permanent magnets that are fixed on an internal peripheral surface of the hub shell 18. The stator 42 is fixed on the hub axle 12. The stator 42 is disposed facing an external periphery of the permanent magnet of the rotor 41. The rotor 41 is fixed to the internal periphery of the expanded part 31a of the case main body 31 of the hub shell 18. The rotor 41 is configured from four permanent magnets, for example, separated at equal intervals in the circumferential direction. The four permanent magnets of the rotor 41 are alternately magnetized to N poles and S poles at equal intervals, and the magnets face the external periphery of first and second yokes 46a and 46b, respectively, which are described later.

The stator 42 has an annular coil 44 capable of multiple (two, for example) output states in which the number of turns differs depending on the rotation of the rotor 41. The coil 44 has an annular first coil 44a and a second coil 44b connected in series to the first coil 44a. The first coil has for example, 200 turns, while the second coil 44b has, for example, 350 turns. Therefore, the entire coil 44 has a total of 550 turns. The first and second coils 44a and 44b are enclosed by first and second yokes 46a and 46a. Thus, the first and second yokes 46a and 46a enclose the peripheries of the first and second coils 44a and 44b. The coils 44a and 44b and the yokes 46a and 46b are nonrotatably fixed to the hub axle 12 so as to be sandwiched by a pair of mounting nuts 48a and 48b that are threaded over the second male screw 12c. The coils 44a and 44b and the yokes 46a and 46b are positioned in the axial direction in a manner that allows them to be accommodated within the expanded part 31a. The control unit 20 is also fixed so as to be sandwiched by the pair of mounting nuts 48a, 48b.

The first and second coils 44a and 44b are wound around first and second bobbins 49a and 49b, respectively. The first and second bobbins 49a and 49b are ridged cylindrical members having cylinders around the outer peripheries of which the first and second coils 44a and 44b are wound, and a pair of flanges that are formed at the ends of the cylinders. The first end of the first coil 44a is electrically connected to the hub axle 12, and the second end of the first coil 44a is electrically connected to the first end of the second coil 44b and to the control unit 20 via the internal wire 30. The second end of the second coil 44b is electrically connected to the control unit 20 via the internal wire 30.

The first and second yokes 46a and 46b are stacked claw-pole yokes having multiple stacked yokes (14, for example) that are disposed facing each other and are arranged at intervals in the peripheral direction.

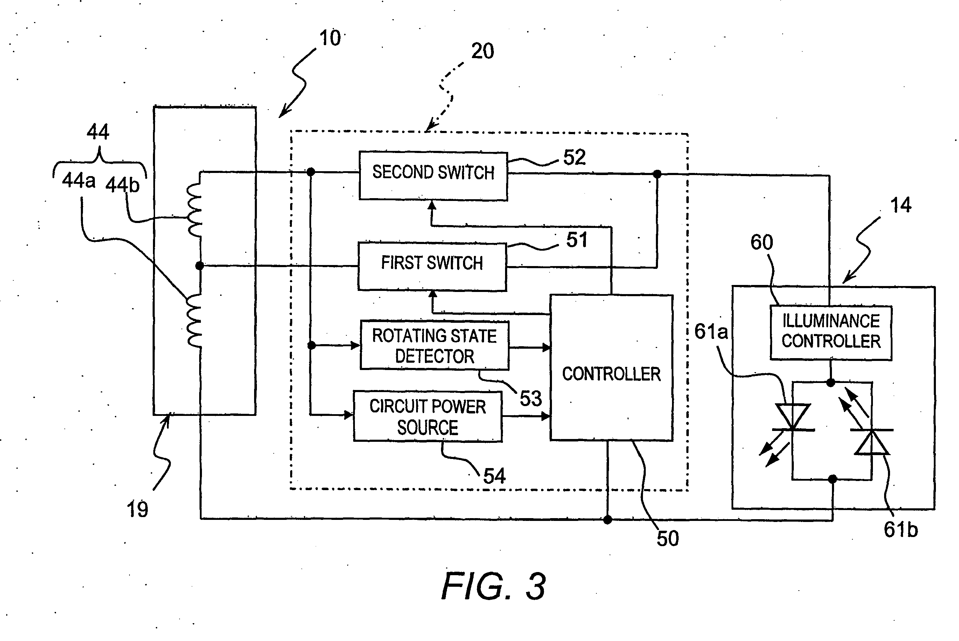

The control unit 20 is disposed, e.g., on a washer-shaped circuit board 21 that is nonrotatably mounted on the hub axle 12. As shown in Figure 3, the control unit 20 includes a controller 50, first and second switches 51 and 52, a rotating state detector 53 and a circuit power source 54. The controller 50 selectively controls the electrical output states of the power generation unit 19 in accordance with the rotating state of the power generation unit 19. The first and second switches 51 and 52 are connected separately to the first coil 44a and the second coil 44b. The rotating state detector 53 is configured and arranged for detecting the rotating state of the power generation unit 19. The circuit power source 54 is configured and arranged for supplying a DC constant voltage to the controller 50, as shown in Figure 3.

The controller 50 has, e.g., a microcomputer having a CPU, a RAM, a ROM, and an input/output I/F. The controller 50 switches the electrical output state of the power generation unit 19 depending on whether the first and second switches 51 and 52 are turned on or off. The switching is performed in accordance with the rotating state of the power generation unit 19 as detected by the rotating state detector 53.

The first switch 51 is connected to the second end of the first coil 44a, and is used to turn the first coil 44a on and off. The second switch 52 is connected to the second end of the second coil 44b, and is used to turn the second coil 44b on and off. The switches 51 and 52 are controllably turned on and off by the controller 50 as previously described. The output of the first and second switches 51 and 52 is collectively connected to the connector 22 via the internal wire 30.

The rotating state detector 53 is connected between the second switch 52 and the second end of the second coil 44b. From the output of the power generation unit 19, the rotating state detector 53 generates, e.g., 14 pulse signals per rotation of the rotor 41 of the power generation unit 19, and outputs these pulse signals to the controller 50. The controller 50 receives these pulse signals with a specific timing and calculates the rotational speed V (rpm) of the rotor 41.

The circuit power source 54 is connected between the second switch 52 and the second end of the second coil 44b. The circuit power source 54 rectifies the output of the power generation unit 19 to a direct current, converts the output, e.g., to a specific constant DC voltage of about 3 to 5 volts, and supplies this voltage to the controller 50.

The head lamp 14 is fixed to a lamp stay 102b provided to the front fork 102a, as shown in Figure 1. The head lamp 14 has a lens 15a on the front, and comprises a lamp case 15 fixed to the lamp stay 102b. The head lamp 14 is the bicycle illumination device.

As shown in Figure 3, the interior of the lamp case 15 is provided with an illuminance controller 60, and first and second light-emitting diodes 61a and 61b. The first and second light-emitting diodes 61 a and 61b are light sources that are turned on and off by the illuminance controller 60. The illuminance controller 60 collectively turns the first and second light-emitting diodes 61a and 61b on and off. The illuminance controller 60 is disposed between the first and second switches 51 and 52 and the first and second light-emitting diodes 61a and 61b. The illuminance controller 60 turns the first and second light-emitting diodes 61a and 61b off during bright conditions in which the surroundings are bright, such as daytime, for example, and turns the first and second light-emitting diodes 61a and 61b on during dark conditions when the surroundings are dark, such as nighttime, for example.

The first and second light-emitting diodes 61a and 61b emit high-intensity white light of about 3W and 700 mA, for example. The first and second light-emitting diodes 61a and 61b are connected in parallel so as to have different polarities. Specifically, the anode of the first light-emitting diode 61 a is connected to the cathode of the second light-emitting diode 61b, the cathode of the second light-emitting diode 61b is connected to the anode of the second light-emitting diode 61b, and the first and second light-emitting diodes 61a and 61b are disposed facing opposite directions (this arrangement is hereinafter referred to as a bi-directional connection). The AC output from the power generation unit 19 can thereby be used without being rectified to a direct current.

### CONFIGURATION OF MODIFICATION

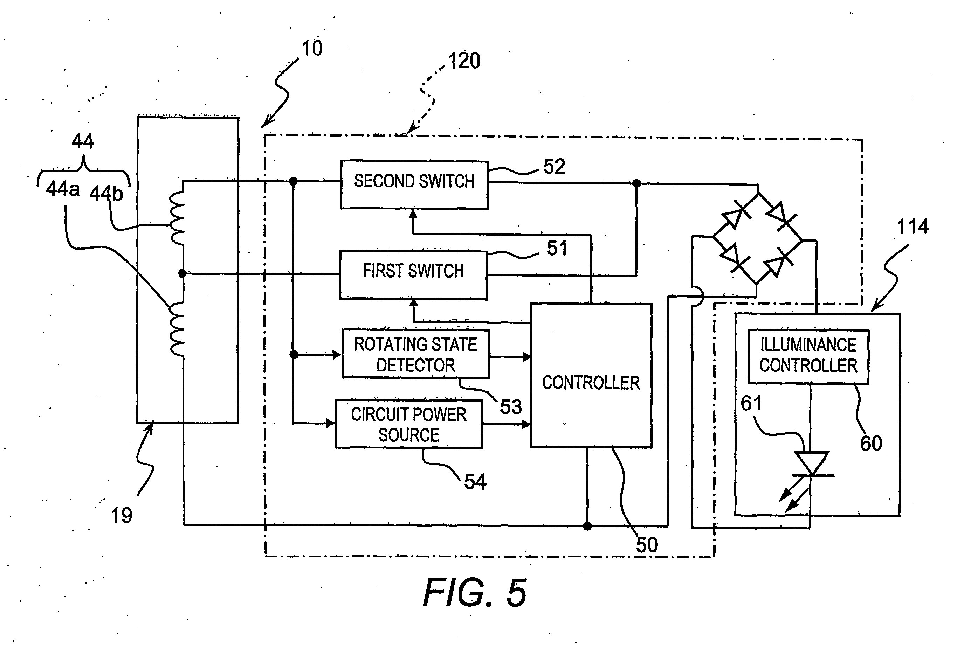

As a modification, a full-wave rectifier circuit 55 as a diode bridge may be provided to a control unit 120, for example, as shown in Figure 5, and a light-emitting diode 61 of a headlight 114 may be turned on and off with rectified electric power. The configuration in this case is shown in Figure 5. In Figure 5, the outputs of the first and second switches 51 and 52 together are connected to the full-wave rectifier circuit 55. The output of the full-wave rectifier circuit 55 is connected to the connector 22. In the configuration of this modification, only one light-emitting diode 61 is needed as a light source for the headlight 114. Therefore, the configuration of the headlight is simplified.

In the modification in which the full-wave rectifier circuit 55 is used as a diode bridge for rectification, the presence of the diodes of the full-wave rectifier circuit 55 results in a voltage drop and causes greater loss at low speeds. By contrast, in the first embodiment in which the full-wave rectifier circuit 55 is not used, there is no loss due to the presence the full-wave rectifier circuit 55, the output during low speeds is higher than in cases in which a full-wave rectifier circuit is used, and the light-emitting diodes 61a and 61b are brighter.

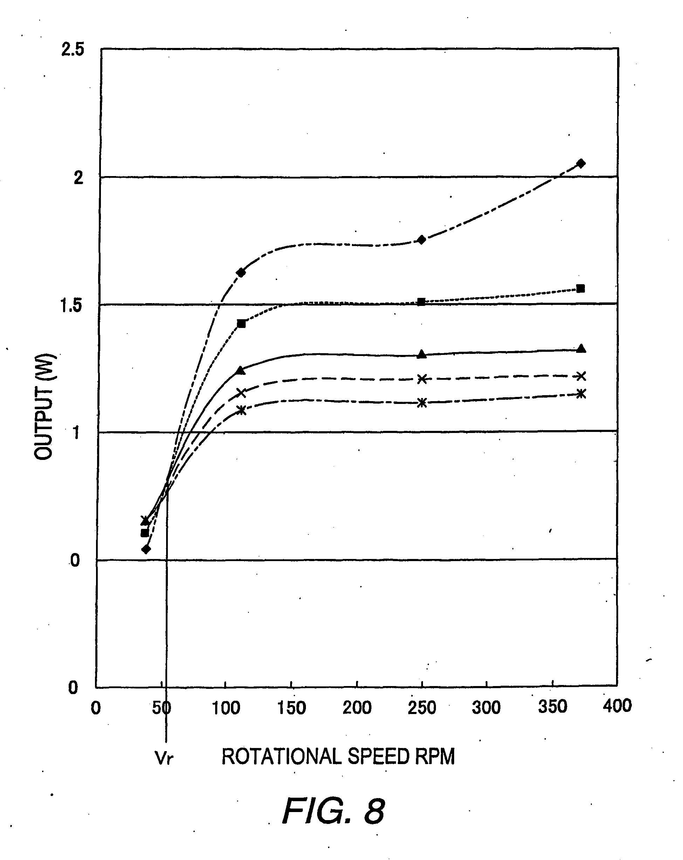

The following is a description of the relationship between light-emitting diode output (W) and the rotational speed (rpm) of the rotor 41 when the number of coil turns is changed. The relationship is considered in cases in which the full-wave rectifier circuit 55 is used, and in cases in which the light-emitting diodes are bi-directionally connected. Figure 8 shows the relationship in a case of bi-directional connection, and the relationship in a case of using a full-wave rectifier circuit.

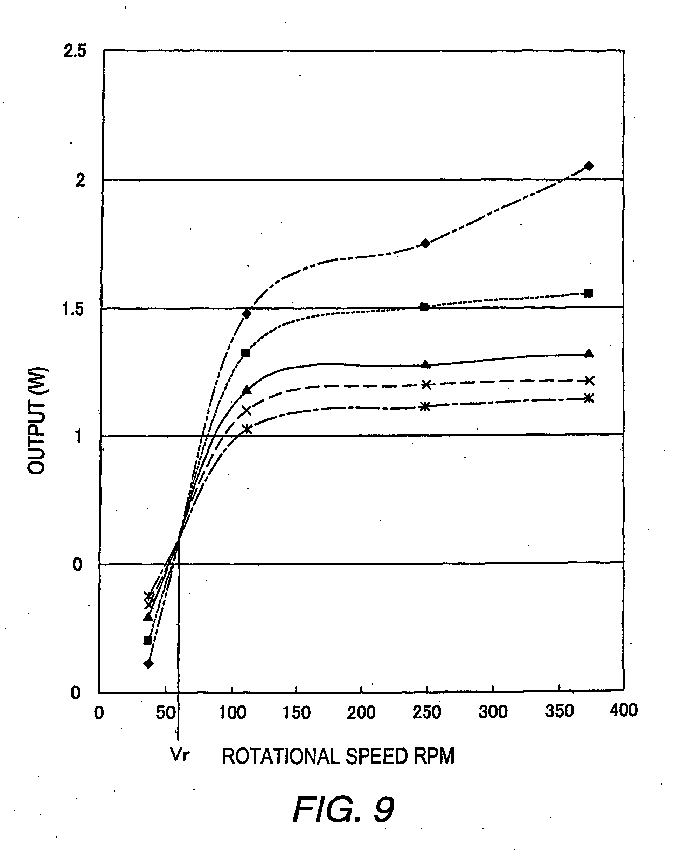

In Figures 8 and 9, the curves shown by the single-dotted lines are output curves representing the relationship between light-emitting diode output and rotational speed in a case in which the coil has 460 turns. Progressing in sequence upward, the curves shown by long-dashed lines, solid lines, short-dashed lines, and double-dotted lines are output curves of cases in which the number of coil turns is changed to 430, 400, 345, and 300. As is made clear from Figures 8 and 9, it is preferable to increase the number of turns of the coil to apply the highest possible voltage at low speeds less than about 60 rpm, for example. It is also clear that it is preferable to reduce the number of turns of the coil to apply the largest possible voltage at moderate-to-high speeds exceeding about 60 rpm. Furthermore, it is clear that output at low speeds decreases more so in the case in Figure 9 in which a full-wave rectifier circuit 55 is used than in the case in Figure 8 of bi-directional connection. This is due to the loss in the full-wave rectifier circuit as previously described. However, not much change is observed in output at moderate-to-low speeds. It is therefore apparent that the output curves intersect at a certain rotational speed as a result of the changes in the number of turns. In view of this, in the first embodiment of the present invention, multiple output states having different numbers of coil turns can be achieved, and the output of the light-emitting diodes is improved as a result of the controller 50 switching the electrical output state in the proximity of the intersecting rotational speed Vr (50 to 60 rpm, for example).

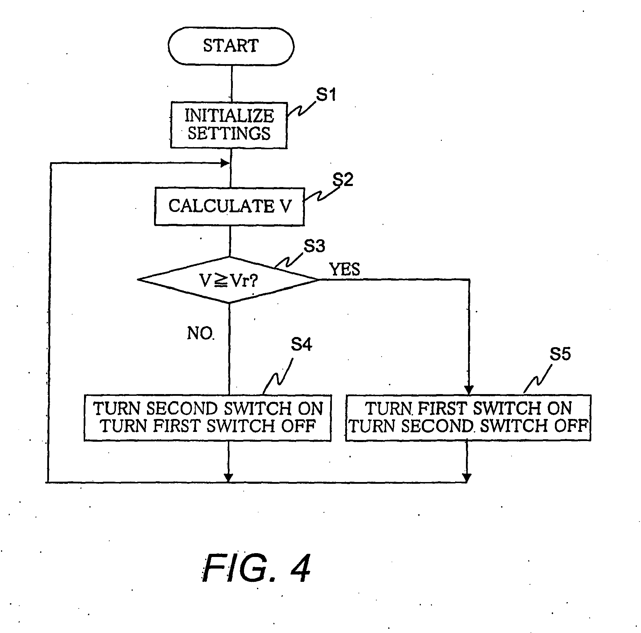

Next, the switching control operation of the controller 50 will be described with reference to the control flowchart shown in Figure 4.

When the bicycle 101 is ridden and power is supplied to the controller 50, initial settings are implemented in step S1. In step S1, the rotational speed Vr for switching and other data is set. In step S2, the rotational speed V of the rotor 41 is calculated from pulse signal data indicating the rotating state outputted from the rotating state detector 53. In step S3, a determination is made as to whether the speed V is less than the speed Vr, i.e., the speed at which the output curves intersect at low speeds and moderate-to-high speeds.

In cases in which the speed V is less than the speed Vr, the process advances from step S3 to step S4. In step S4, the second switch 52 is turned on, the first switch 51 is turned off, and the process returns to step S2. The coil 44 thereby has 550 turns, and AC power with the highest possible voltage is outputted from the power generation unit 19. In cases in which the speed V is equal to or greater than the speed V, the process advances from step S3 to step S5. In step S5, the first switch 51 is turned on, the first switch 51 is turned off, and the process returns to step S2. The first coil 44a of the coil 44 has 200 turns, and thereby, the largest possible electric current is outputted from the power generation unit 19.

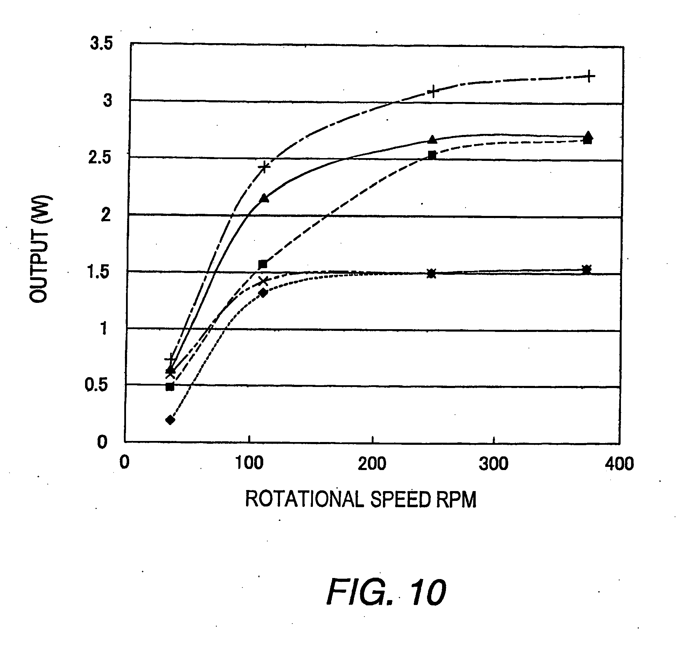

Thus, in the first embodiment, the first coil 44a has, e.g., 200 turns, the second coil 44b has 350 turns, and the entire coil 44 has 550 turns. The controller 50 turns the second switch 52 on at low speeds of, e.g., up to about 50 to 60 rpm, and increases the generated voltage as much as possible with a high number of turns (the sum of the number of turns in the first and second coils 44a and 44b is 550, for example). At moderate-to-high speeds greater than 50 to 60 rpm, the controller 50 turns the first switch 51 on and increases the generated electric current as high as possible at a low number of turns (200 turns in the first coil 44a, for example). The output curve for this case is shown in Figure 10. In Figure 10, a solid line is used to show the output curve of the first embodiment, and a long-dashed line to show the output curve of the modification in which the full-wave rectifier circuit 55 is used.

In cases in which the full-wave rectifier circuit 55 is used, only one light-emitting diode 61 is needed as previously described. For the sake of comparison, the single-dotted line is an output curve of a case in which a 15-ohm light bulb is connected to a conventional hub dynamo (for example, a hub dynamo having a coil with 460 turns), the double-dotted line is an output curve of a case in which bi-directionally connected light-emitting diodes are connected to a conventional hub dynamo, and the short-dashed line is an output curve of a case in which the light-emitting diode is connected to a conventional hub dynamo via a full-wave rectifier circuit.

As is made clear from Figure 10, it is possible to achieve a large output that is not much different from the output of a light bulb. This result is obtained by switching the number of coil turns between low speeds and moderate-to-high speeds. It is also clear that output is greatly improved in comparison with cases in which the light-emitting diodes are connected to a conventional hub dynamo.

### SECOND EMBODIMENT

In the first embodiment, the two coils were connected in series and the hub dynamo 10 was capable of outputting multiple output states, but in the second embodiment, multiple output states can be outputted with the use of a variable coil (inductance).

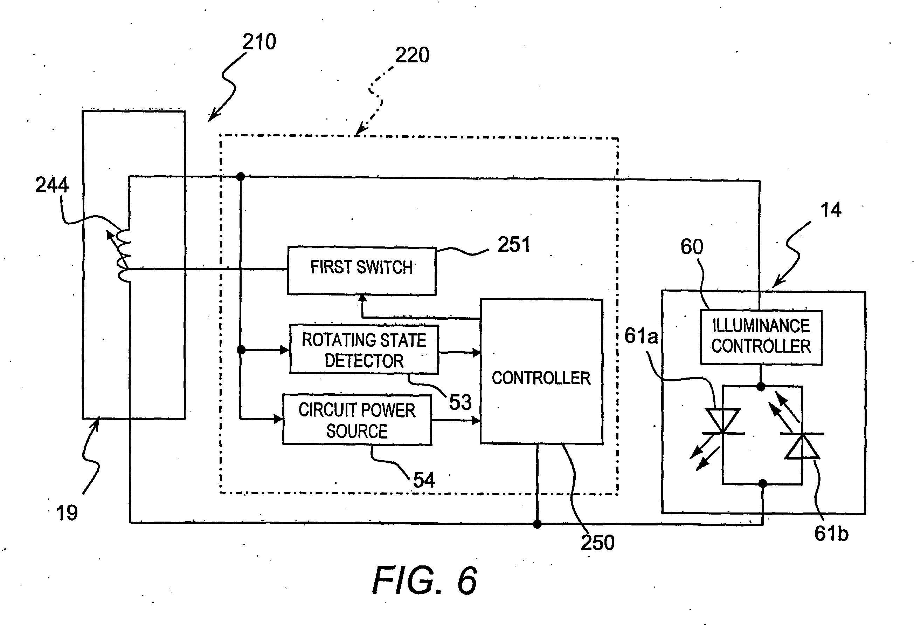

In Figure 6, a power generation unit 219 of a hub dynamo 210 has a variable coil 244. The variable coil 244 has a fixed terminal and a variable terminal, and the variable terminal can continuously or intermittently vary the number of turns of the variable coil 244 by being driven by a variable terminal drive unit 251 that uses a motor, a solenoid, or another such actuator. In the second embodiment, a control unit 220 has a variable terminal drive unit 251 for varying the number of turns of the variable coil 244. The variable terminal drive unit 251 is controlled by a controller 250 to switch the number of turns of the variable coil 244 between 200 (N1) and 500 (N2), similar to the first embodiment. The power generation unit 219 thereby outputs power in two output states. The rest of the configuration of the control unit 220 and the headlight 14 is similar to the first embodiment and is therefore not described.

In the second embodiment, when a power source is applied to the controller 250, initial settings are implemented in step S 11. In step S 11, the rotational speed Vr for switching and other data are set. In step S12, the rotational speed V of the rotor 41 is calculated from pulse signal data indicating the rotating state outputted from the rotating state detector 53. In step S 13, a determination is made as to whether the speed V is less than the speed Vr, i.e., the speed at which the output curves intersect at low speeds and moderate-to-high speeds.

In cases in which the speed V is less than the speed Vr, the process advances from step S 13 to step S 14. In step S 14, the variable terminal drive unit 251 is driven to set the number of turns of the variable coil 244 to N2, i.e., 550, and the process returns to step S12. AC power having the highest possible voltage is thereby outputted from the power generation unit 219. In cases in which the speed V is equal to or greater than the speed V, the process advances from step S 13 to step S 15. In step S 15, the variable terminal drive unit 251 is driven to set the number of turns of the variable coil 244 to N1, i.e., 200, and the process returns to step S2. The largest possible electric current is thereby outputted from the power generation unit 219.

In cases in which the variable coil 244 is used, control may be more precise in accordance with the rotational speed V. It is apparent that continuous control may be performed in accordance with the rotational speed. Since the number of turns can be freely varied, it is possible to easily adapt to differences in the characteristics of the light-emitting diodes, and the optimum output state can be selected in accordance with the output characteristics of the light-emitting diodes.

### OTHER EMBODIMENTS

In the previous embodiments, a hub dynamo was used as an example of a bicycle electric generator, but the present invention is not limited to this option alone, and can also be applied to a rim dynamo, an electric power generator disposed between the frame and the spokes of the wheel, or an electric power generator disposed on the outside of the spokes of the wheel.

In the previous embodiments, a head lamp was used as an example of an illumination device that could be connected to the electric power generator, but any manner of bicycle illumination device can be connected as long as the illumination device uses light-emitting diodes. For example, a connection can be made to a tail lamp or a position lamp that flashes to show the position of the bicycle.

In the previous embodiments, the electrical output state was switched between 200 turns and 550 turns at a speed Vr, but these numerical values only constitute one example and vary depending on the output characteristics of the light-emitting diode.

In the previous embodiments, the electrical output state of the power generation unit varies between two states, but may also vary between three or more states.

In the previous embodiments, the first coil and second coil were connected in series, but the present invention is not limited to this option alone. For example, another option is to switch between a parallel connection of two coils and the separate use of coils, or to switch between a series connection and a parallel connection.

In the previous embodiments, the control unit 20 was disposed inside the hub shell 18, but the controller may also be disposed outside of the hub shell.

In the previous embodiments, two coils were used, but another option is to use the outputs from both the 550-turn part and a 200-turn part in the middle of one coil having 550 turns, for example.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle electric generator (10) comprising:
a power generation unit (19) including a rotor (41) arranged to rotate and a stator (42) with a coil (44) arranged to produce a plurality of electrical output states in which a number of turns of the coil (44) that are used differs depending on a rotating state of the rotor (41); **characterized in that**
a controller (50) can be configured to selectively control the electrical output states of the power generation unit (19) in accordance with the detected rotating state of the rotor (41) of the power generation unit (19).

2. The bicycle electric generator (10) according to claim 1, wherein
the coil (44) includes a first coil (44a) and a second coil (44b) connected to the first coil (44a).

3. The bicycle electric generator (10) according to claim 2, wherein
the second coil (44b) is connected in series with the first coil (44a).

4. The bicycle electric generator (10) according to claim 2, wherein
the second coil (44b) has a different number of turns from the first coil (44a).

5. The bicycle electric generator (10) according to claim 2, further comprising
first and second switches (51; 52) connected separately to the first coil (44a) and second coil (44b); and
a rotating state detector (53) operatively arranged to detect the rotating state of the rotor (41) of the power generation unit (19),
the controller (50) being operatively arranged to selectively turn on one of the first and second switches (51, 52) in accordance with the rotating state detected by the rotating state detector (53).

6. The bicycle electric generator (10) according to claim 1, wherein
the coil (44) includes a fixed terminal and a variable terminal for varying the number of turns, with the controller (50) being configured to control the variable terminal of the coil (44), and to selectively control the electrical output states in accordance with the rotating state of the rotor (41).

7. The bicycle electric generator (10) according to claim 1, wherein
the controller (50) is configured to detect rotational speed of the rotor (41) as the rotating state of the rotor (41).

8. The bicycle electric generator (10) according to claim 3, wherein
the second coil (44b) has a different number of turns from the first coil (44a).

9. The bicycle electric generator (10) according to claim 3, further comprising
first and second switches (51, 52) connected separately to the first coil (44a) and second coil (44b); and
a rotating state detector (53) operatively arranged to detect the rotating state of the rotor (41) of the power generation unit (19),
the controller (50) being operatively arranged to selectively turn on one of the first and second switches (51, 52) in accordance with the rotating state detected by the rotating state detector (53).

10. The bicycle electric generator (10) according to claim 1, further comprising
a hub axle (12) with the stator (42) fixedly coupled to the hub axle (12);
a hub shell (18) disposed on an external peripheral side of the hub axle (12) with the rotor (41) fixedly coupled to the hub shell (18); and
at least one bearing (16, 17) rotatably supporting the hub shell (18) with respect to the hub axle (12).

## Patentansprüche

1. Elektrogenerator (10) für Fahrräder, aufweisend:
eine Stromerzeugungseinheit (19), die einen Rotor (41), der angeordnet ist, um zu rotieren, und einen Stator (42) mit einer Spule (44) beinhaltet, die angeordnet ist, um eine Mehrzahl von elektrischen Ausgabezuständen zu erzeugen, wobei eine Anzahl von Windungen der Spule (44), die verwendet werden, sich in Abhängigkeit von einem Rotationszustand des Rotors (41) unterscheidet;
**dadurch gekennzeichnet, dass**
eine Steuereinrichtung (50) konfiguriert sein kann, um die elektrischen Ausgabezustände der Stromerzeugungseinheit (19) gemäß dem erfassten Rotationszustand des Rotors (41) der Stromerzeugungseinheit (19) wahlweise zu steuern.

2. Elektrogenerator (10) für Fahrräder nach Anspruch 1, bei dem die Spule (44) eine erste Spule (44a) und eine zweite Spule (44b) beinhaltet, die mit der ersten Spule (44a) verbunden ist.

3. Elektrogenerator (10) für Fahrräder nach Anspruch 2, bei dem die zweite Spule (44b) seriell zur ersten Spule (44a) angeschlossen ist.

4. Elektrogenerator (10) für Fahrräder nach Anspruch 2, bei dem die zweite Spule (44b) eine von der ersten Spule (44a) unterschiedliche Anzahl von Windungen aufweist.

5. Elektrogenerator (10) für Fahrräder nach Anspruch 2, weiter aufweisend:
erste und zweite Schalter (51, 52), die separat mit der ersten Spule (44a) und der zweiten Spule (44b) verbunden sind; und
eine Rotationszustand-Erfassungseinrichtung (53), die funktionsmäßig angeordnet ist, um den Rotationszustand des Rotors (41) der Stromerzeugungseinheit (19) zu erfassen,
die Steuereinrichtung (50) funktionsmäßig angeordnet ist, um wahlweise einen von den ersten und zweiten Schaltern (51, 52) anzuschalten, und zwar gemäß dem Rotationszustand, der durch die Rotationszustand-Erfassungseinrichtung (53) erfasst wird.

6. Elektrogenerator (10) für Fahrräder nach Anspruch 1, bei dem die Spule (44) einen festen Anschluss und einen variablen Anschluss beinhaltet, um die Anzahl von Windungen zu variieren, wobei die Steuereinrichtung (50) konfiguriert ist, um den variablen Anschluss der Spule (44) zu steuern, und die elektrischen Ausgabezustände gemäß dem Rotationszustand des Rotors (41) wahlweise zu steuern.

7. Elektrogenerator (10) für Fahrräder nach Anspruch 1, bei dem die Steuereinrichtung (50) konfiguriert ist, um die Drehzahl des Rotors (41) als Rotationszustand des Rotors (41) zu erfassen.

8. Elektrogenerator (10) für Fahrräder nach Anspruch 3, bei dem die zweite Spule (44b) eine von der ersten Spule (44a) unterschiedliche Anzahl von Windungen aufweist.

9. Elektrogenerator (10) für Fahrräder nach Anspruch 3, weiter aufweisend:
erste und zweite Schalter (51, 52) die separat mit der ersten Spule (44a) und der zweiten Spule (44b) verbunden sind; und
eine Rotationszustand-Erfassungseinrichtung (53), die funktionsmäßig angeordnet ist, um den Rotationszustand des Rotors (41) der Stromerzeugungseinheit (19) zu erfassen,
wobei die Steuereinrichtung (50) funktionsmäßig angeordnet ist, um einen von den ersten und zweiten Schaltern (51, 52) wahlweise anzuschalten, und zwar gemäß dem Rotationszustand, der durch die Rotationszustand-Erfassungseinrichtung (53) erfasst wird.

10. Elektrogenerator (10) für Fahrräder nach Anspruch 1, weiter aufweisend:
eine Nabenachse (12), wobei der Stator (42) mit der Nabenachse (12) fest gekoppelt ist;
ein Nabengehäuse (18), das auf einer Außenumfangsseite der Nabenachse (12) angeordnet ist, wobei der Rotor (41) mit dem Nabengehäuse (18) fest gekoppelt ist; und
mindestens ein Lager (16, 17), welches das Nabengehäuse (18) bezüglich der Nabenachse (12) drehbar lagert.

## Revendications

1. Générateur électrique de bicyclette (10) comprenant :
un unité de production d'énergie (19) incluant un rotor (41) agencé pour tourner et un stator (42) pourvu d'une bobine (44) agencée pour produire une pluralité d'états de sortie électrique dans lesquels un nombre des tours de la bobine (44) qui sont utilisés varie en fonction d'un état de rotation du rotor (41) ;
**caractérisée en ce que**
un dispositif de commande (50) peut être configuré pour commander de manière sélective les états de sortie électrique de l'unité de production d'énergie (19) en fonction de l'état de rotation détecté du rotor (41) de l'unité de production d'énergie (19).

2. Générateur électrique de bicyclette (10) selon la revendication 1, dans lequel
la bobine (44) comprend une première bobine (44a) et une deuxième bobine (44b) raccordée à la première bobine (44a).

3. Générateur électrique de bicyclette (10) selon la revendication 2, dans lequel
la deuxième bobine (44b) est raccordée en série à la première bobine (44a).

4. Générateur électrique de bicyclette (10) selon la revendication 2, dans lequel
la deuxième bobine (44b) a un nombre de tours différent du nombre de tours de la première bobine (44a).

5. Générateur électrique de bicyclette (10) selon la revendication 2, comprenant en outre
des premier et deuxième commutateurs (51, 52) connectés séparément à la première bobine (44a) et à la deuxième bobine (44b) ; et
un détecteur d'état de rotation (53) agencé de manière fonctionnelle pour détecter l'état de rotation du rotor (41) de l'unité de production d'énergie (19),
le dispositif de commande (50) étant agencé de manière fonctionnelle pour mettre de manière sélective l'un des premier et deuxième commutateurs (51, 52) sur marche en fonction de l'état de rotation détecté par le détecteur d'état de rotation (53).

6. Générateur électrique de bicyclette (10) selon la revendication 1, dans lequel
la bobine (44) comprend une borne fixe et une borne variable pour faire varier le nombre de tours, le dispositif de commande (50) étant configuré pour commander la borne variable de la bobine (44), et pour commander de manière sélective les états de sortie électrique en fonction de l'état de rotation du rotor (41).

7. Générateur électrique de bicyclette (10) selon la revendication 1, dans lequel
le dispositif de commande (50) est configuré pour détecter une vitesse de rotation du rotor (41) comme l'état de rotation du rotor (41).

8. Générateur électrique de bicyclette (10) selon la revendication 3, dans lequel
la deuxième bobine (44b) a un nombre de tours différent du nombre de tours de la première bobine (44a).

9. Générateur électrique de bicyclette (10) selon la revendication 3, comprenant en outre
des premier et deuxième commutateurs (51, 52) connectés séparément à la première bobine (44a) et à la deuxième bobine (44b) ; et
un détecteur d'état de rotation (53) agencé de manière fonctionnelle pour détecter l'état de rotation du rotor (41) de l'unité de production d'énergie (19),
le dispositif de commande (50) étant agencé de manière fonctionnelle pour mettre de manière sélective l'un des premier et deuxième commutateurs (51, 52) sur marche en fonction de l'état de rotation détecté par le détecteur d'état de rotation (53).

10. Générateur électrique de bicyclette (10) selon la revendication 1, comprenant en outre
un axe de moyeu (12), le stator (42) étant couplé de manière fixe à l'axe de moyeu (12) ;
un carter de moyeu (18) disposé sur un côté périphérique extérieur de l'axe de moyeu (12), le rotor (41) étant couplé de manière fixe au carter de moyeu (18) ; et
au moins un palier (16, 17) supportant en rotation le carter de moyeu (18) par rapport à l'axe de moyeu (12).
